# EUROPÄISCHE PATENTSCHRIFT

(11) **EP 1 368 434 B1**
(45) Veröffentlichungstag und Bekanntmachung des Hinweises auf die Patenterteilung: **15.09.2004**
(21) Anmeldenummer: 02722155.5
(22) Anmeldetag: 28.02.2002
(51) Int. Cl.: C09B 67/20, C09D 11/02, C09B 67/00

(54) **DIARYLGELBPIGMENTPRAEPARATIONEN**
DIARYL YELLOW PIGMENT PREPARATIONS
PREPARATIONS DE PIGMENTS DE JAUNE DE DIARYLE

(30) Priorität: 06.03.2001 DE 10110596
(43) Veröffentlichungstag der Anmeldung: 10.12.2003
(73) Patentinhaber: Clariant GmbH, 65929 Frankfurt am Main (DE)
(72) Erfinder: BACH, Heinz, 65929 Frankfurt am Main (DE); OTT, Ulrich, 65719 Hofheim (DE); WINTER, Rainer, 61440 Oberursel (DE); HEBER, Thomas, 65795 Hattersheim (DE); KAISER, Rolf, 65936 Frankfurt am Main (DE)
(74) Vertreter: Hütter, Klaus, Dr.
(86) Internationale Anmeldenummer: PCT/EP2002/002124
(87) Internationale Veröffentlichungsnummer: WO 2002/070611

(56) Entgegenhaltungen:
- EP-A- 0 313 360
- EP-A- 0 513 782
- WO-A-99/23172

## Beschreibung

Die Erfindung betrifft Diarylgelbpigmente, die mit einer speziellen Kombination von Naturharzderivaten präpariert sind und bei der Verwendung in Offsetdruckfarben verbesserte anwendungstechnische Eigenschaften aufweisen.

An Offsetdruckfarben werden besondere Anforderungen hinsichtlich Rheologie, d.h. der Viskosität und der Fließfähigkeit, sowie der Coloristik, wie z.B. Farbstärke, gestellt. Offsetdruckfarben sollten einerseits eine hohe Fließfähigkeit besitzen, um in schnelllaufenden Offsetrotationsmaschinen einsetzbar zu sein. Andererseits wirkt eine Erhöhung der Viskosität bei großen Schergefällen, wie sie in den Walzenspalten und den Druckplattenzylindern der Druckmaschinen auftreten, dem Nebeln der Druckfarbe entgegen.

Abhängig von der Art der Pigmentklasse werden verschiedene Methoden der Präparierung der Pigmentpartikel vorgeschlagen.
Aus der EP-A-0 313 360 ist bekannt, Azo- und Phthalocyanin-Pigmente mit einer equimolaren Menge, bezogen auf das Pigment, eines Kiefemharzes und einem Aluminiumsalz zu präparieren, um eine bessere Dispergierung und eine höhere Farbstärke in Druckfarben zu erreichen.
In der EP-A-0 671 443 wird die Neigung geharzter Pigmente zur Selbsterhitzung durch Zugabe mehrwertiger Metalle zur wässrigen Pigmentsuspension vermindert. In der JP-A-10 120930 wird vorgeschlagen, Disazopigmente mit Abietinsäure und einem Gemisch aus einem Ca- und einem Al-Salz zu präparieren.

Die genannten Methoden des Standes der Technik weisen insbesondere bei Diarylgelbpigmenten Defizite bei der Farbstärke, bei der Viskosität und/oder bei der Fließfähigkeit auf.

Es bestand daher die Aufgabe, Diarylgelbpigmente so zu präparieren, dass sie eine hohe Fließfähigkeit, hohe Viskosität und gute coloristische Eigenschaften, wie z.B. hohe Farbstärke, aufweisen.

Es wurde gefunden, dass eine Kombination von Diarylgelbpigmenten mit Naturharz, bestimmten Abietinsäurederivaten und einer bestimmten Menge einer Al-, Zn-, Mn- oder Fe-Verbindung überraschenderweise die gestellte Aufgabe löst.

Gegenstand der vorliegenden Erfindung ist eine Diarylgelbpigmentpräparation, enthaltend
a) mindestens ein Diarylgelbpigment,
b) mindestens ein Naturharz auf Basis von Kolophonium oder modifiziertem Kolophonium,
c) mindestens eine Verbindung der Formel (1) 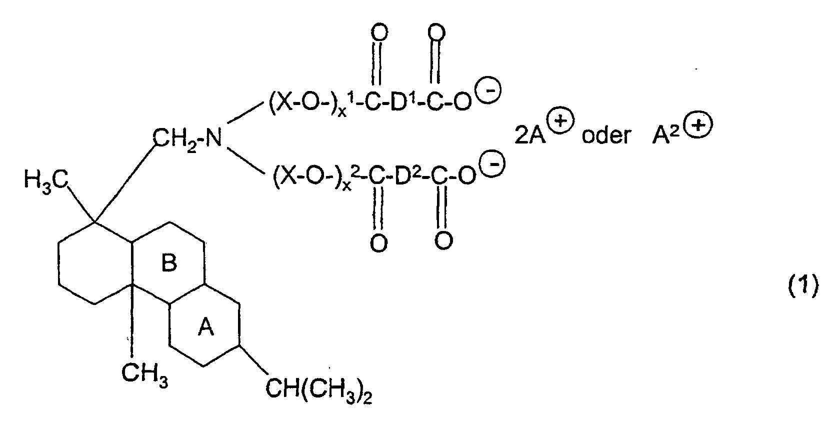 worin der Ring A gesättigt, ungesättigt oder aromatisch und der Ring B gesättigt oder ungesättigt ist;
   - X: für eine Gruppe der Formeln -CH₂-CH₂-, -CH₂CH(CH₃)- oder -CH(CH₃)CH₂-, oder eine Kombination daraus, wenn x > 1 ist;
   x¹ und x² eine Zahl von 0 bis 16 bedeutet, wobei die Summe x¹ und x² eine Zahl von 2 bis 20 ist;
   - D¹ und D²: gleich oder verschieden sind und einen gesättigten oder olefinischen C₁-C₄-Kohlenwasserstoffrest bedeuten;
   - A^{⊕} und A^{2⊕}: ein Ammoniumion eines Amins der Formel

   H₂N-(CR¹R²)_{y}¹-(NR³-(CR¹R²)_{y}²-)_{z}-NR⁴R⁵

   bedeuten, worin R¹ bis R⁵ gleich oder verschieden sind und Wasserstoff, Methyl oder Ethyl bedeuten, y¹ und y² jeweils eine Zahl von 1 bis 4 und z eine Zahl von Null bis 10 bedeutet; und
d) eine Aluminium-, Zink-, Mangan- oder Eisen-Verbindung in einer Menge von 0,1 bis 8 Gew.-% (berechnet als Metallkation), bezogen auf Komponente b); und gegebenenfalls
e) ein Polyesteramid und/oder übliche Hilfsmittel.

Unter Diarylgelbpigmenten a) werden im allgemeinen solche der Formel (2) verstanden, 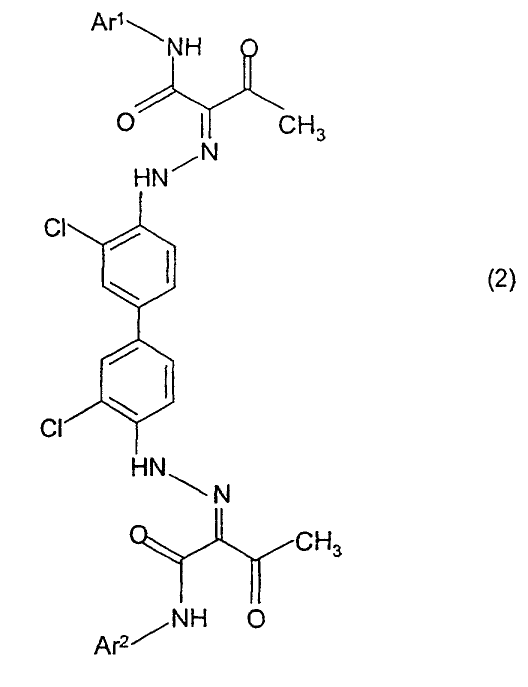 worin Ar¹ und Ar² gleich oder verschieden sind und eine unsubstituierte oder mit ein bis drei Substituenten aus der Gruppe Halogen, wie Chlor, Methyl oder Methoxy substituierte Phenylgruppe bedeuten.

Bevorzugte Diarylgelbpigmente im Sinne der vorliegenden Erfindung sind C.I. P.Yellow 12, 13, 14, 17, 126, 127, 174, 176 und 188.

Unter einem Naturharz b) werden im allgemeinen natürliche Harzsäuren, ihre Hydrierungs- und Disproportionierungsprodukte sowie Diels-Alder-Addukte von Kolophonium und Maleinsäureanhydrid verstanden, wobei die genannten Harzverbindungen vorzugsweise in Form der handelsüblichen Kolophoniumarten vorliegen oder daraus gewonnen werden. Natürliche Harzsäuren sind z.B. Abietinsäure, Dehydroabietinsäure, Dihydroabietinsäure, Tetrahydroabietinsäure, Laevopimarsäure, Dextropimarsäure und Isodextropimarsäure, sowie Gemische davon.

Die Komponente c) leitet sich bevorzugt von Abietylamin, Dehydro- oder Dihydroabietylamin ab. Weiterhin bedeutet x¹ und x² vorzugsweise eine Zahl von 1 bis 10, wobei die Summe x¹ und x² vorzugsweise 4 bis 16 beträgt. D¹ und D² bedeuten vorzugsweise -CH₂-, CH₂CH₂-, -(CH₂)₄- und -CH=CH-, insbesondere -CH=CH-; und y¹ und y² bedeuten jeweils vorzugsweise 2 oder 3 und z ist vorzugsweise eine Zahl von 1 bis 4.

Besonders bevorzugt ist die Verbindung der Formel (1a) 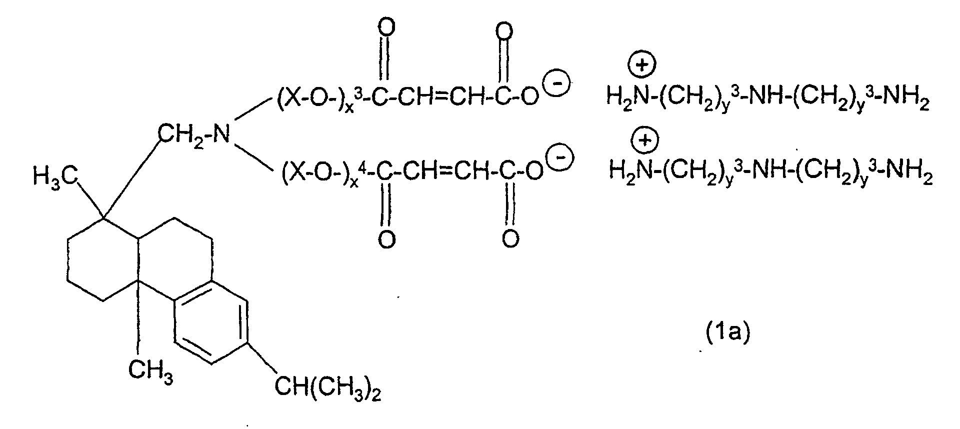 worin X wie vorstehend definiert ist,
x³ und x⁴ jeweils eine Zahl von 2 bis 8 und die Summe x³ und x⁴ eine Zahl von 6 bis 12 ist, und
y³ die Zahl 2 oder 3 bedeutet.

Verbindungen der Formel (1) sind in EP-B1-0 513 782 beschrieben oder können in analoger Weise hergestellt werden.

Als Komponente d) werden vorzugsweise Salze von Al, Zn, Mn und Fe, z.B. die Sulfate, Carbonate, Chloride, Nitrate, Alkoholate und Carboxylate, wie z.B. Acetat oder Citrat, oder auch Hydroxide von Al, Zn, Mn und Fe, eingesetzt. Die genannten Verbindungen können übliche Mengen an Kristallwasser enthalten.

Als Komponente e) können weitere Hilfsmittel, wie Dispergiermittel, z.B. Polyesteramide, oder anionische, kationische oder nichtionische Tenside, wie z.B. Alkoholoxalkylate, zugegeben werden.

Bevorzugte Pigmentpräparationen bestehen im wesentlichen aus 50 bis 90 Gew.-%, insbesondere 60 bis 80 Gew.-%, an Komponente a), 5 bis 45 Gew.-%, insbesondere 10 bis 38 Gew.-%, an Komponente b), 0,2 bis 5 Gew.-%, insbesondere 0,5 bis 2 Gew.-%, an Komponente c) 0,05 bis 2 Gew.-%, insbesondere 0,3 bis 1,5 Gew.-%, an Komponente d), berechnet als Metallkation, und 0 bis 5 Gew.-%, insbesondere 1,8 bis 3,6 Gew.-%, an Komponente e), jeweils bezogen auf das Gesamtgewicht (100 Gew.-%) der Pigmentpräparation.

Gegenstand der Erfindung ist auch ein Verfahren zur Herstellung der Diarylgelbpigmentpräparation, dadurch gekennzeichnet, dass man ein Acetoacetylanilid mit einem Tetrazoniumsalz des 3,3'-Dichlorbenzidins in Gegenwart der Komponente c) kuppelt; die entstandene Pigmentsuspension mit einer wässrig-alkalischen Lösung der Komponente b) kombiniert und auf eine Temperatur zwischen 65 und 150°C erhitzt; die Komponente d) in einer Menge von 0,1 bis 8 Gew.-%, bezogen auf Komponente b), zugibt und anschließend durch Ansäuern die Diarylgelbpigmentpräparation ausfällt und isoliert.

Die Diazotierung der Diazokomponente 3,3'-Dichlorbenzidin kann nach üblichen Methoden durchgeführt werden.
Als Kupplungskomponente werden beispielsweise Acetessigsäureanilid, Acetessigsäure-o-toluidid, Acetessigsäure-m-toluidid, Acetessigsäure-m-xylidid, Acetessigsäure-anisidid, Acetessigsäure-2,5-dimethoxy-4-chlor-anilid oder eine Mischung davon eingesetzt, zweckmäßigerweise in wässriger oder wässrigorganischer Suspension.

In einer besonders bevorzugten Ausführungsform wird der Suspension der Kupplungskomponente eine Emulsion eines Polyesteramids, beispielsweise in einer Menge von 1,8 bis 3,6 Gew.-%, bezogen auf die Gesamtmasse der Pigmentpräparation, zugesetzt.

Die Azokupplung erfolgt in Gegenwart einer oder mehrerer Verbindungen der Formel (1), wobei diese als wässrige Lösung entweder der Kupplungssuspension oder dem Tetrazoniumsalz des 3,3'-Dichlorbenzidins oder beiden zugesetzt sein kann, oder wobei die genannten Reaktionspartner zusammengegeben werden. Die Azokupplung erfolgt vorzugsweise in wässrigem oder wässrig-organischem Medium, bevorzugt bei einem pH zwischen 3 und 7, insbesondere zwischen 4 und 6, und einer Temperatur zwischen 15 und 30°C, insbesondere zwischen 20 und 25°C.

Nach der Kupplung wird die Pigmentsuspension mit einer wässrig-alkalischen Lösung, z.B. in verdünnter Natronlauge oder Kalilauge, eines Naturharzes b) versetzt, wobei die Harzmenge, bezogen auf Pigment, 10 bis 80 Gew.-%, bevorzugt, 20 bis 70 Gew.-%, ist.
Anschließend wird das Gemisch für vorzugsweise mindestens 15 Minuten, normalerweise 30 Minuten bis 10 Stunden, auf eine Temperatur von 65 bis 150°C, bevorzugt 80 bis 120°C, besonders bevorzugt 85 bis 100°C, erhitzt.

Die Metallverbindung (Komponente d) wird dann bei einer Temperatur zwischen 40 und 100°C in fester, gelöster oder suspendierter Form zugesetzt, bevorzugt in einer Menge von 0,1 bis 8 Gew.-%, besonders bevorzugt 1 bis 4 Gew.-% (berechnet als Metallkation), bezogen auf die Komponente b). Der pH-Wert der Mischung sollte dabei zwischen 7,1 und 14 liegen. Anschließend wird z.B. mit Salzsäure, Schwefelsäure oder Essigsäure ein pH-Wert von vorzugsweise 2 bis 6, besonders bevorzugt 3 bis 5, eingestellt, wobei die erfindungsgemäße Diarylgelbpigmentpräparation ausfällt. Die Suspension wird filtriert, salzfrei gewaschen, getrocknet und gegebenenfalls gemahlen.

Die erfindungsgemäßen Pigmentpräparationen lassen sich in für Offsetdruckfarben üblichen Firnissen, z.B. für Bogenoffset, Rollenoffset oder Zeitungsdruck, leicht dispergieren und ergeben Druckfarben mit hoher Farbstärke und besonders guten rheologischen Eigenschaften, nämlich verbesserter Fließfähigkeit bei gleichzeitig hohen Viskositäten bei großen Schergeschwindigkeiten.

Gegenstand der Erfindung ist auch die Verwendung der beschriebenen Diarylgelbpigmentpräparation zur Herstellung von Druckfarben, insbesondere Offsetdruckfarben.

Außerdem eignen sich die erfindungsgemäßen Pigmentpräparationen als Farbmittel in elektrophotographischen Tonern und Entwicklern, wie z.B. Ein oder Zweikomponentenpulvertonem (auch Ein- oder Zweikomponenten Entwickler genannt), Magnettonern, Flüssigtonem, Polymerisationstonern sowie weiteren Spezialtonern (L.B. Schein, "Electrophotography and Development Physics"; Springer Series in Electrophysics 14, Springer Verlag, 2^{nd} edition, 1992).
Des weiteren sind die erfindungsgemäßen Pigmentpräparationen geeignet als Farbmittel in Ink-Jet Tinten auf wässriger und nichtwässriger Basis, sowie in solchen Tinten, die nach dem Hot-melt Verfahren arbeiten oder auf Mikroemulsionen basieren.

In den nachstehenden Beispielen wurde die Farbstärke anhand von Prüfbau-Probeandrucken auf Kunstdruckpapier Apco II/II (Fa. Scheuffelen, Oberlenningen) mit einer Farbauflage von 1,5 g/m² farbmetrisch bestimmt.

Die Viskositätsbestimmung erfolgte auf einem Laray-Viskosimeter, wobei die Viskosität bei 12 Laraysekunden abgelesen wurde.

Zur Bestimmung der Fließfähigkeit wurde 1 g der Offsetfarbe auf eine schiefe Ebene (45°-Winkel) aufgebracht und die Fließstrecke nach 3 Stunden Fließzeit in mm gemessen. Je höher der Wert, desto besser die Fließfähigkeit.

Teile bedeuten Gewichtsteile. Prozente bedeuten Gewichtsprozent.

### Beispiel 1:

Zu einer Kuppelkomponentensuspension mit einem pH-Wert von 5,6, hergestellt aus 11,6 Teilen (30 Mol-%) Acetessigsäure-o-toluidid und 28,8 Teilen (70 Mol-%) Acetessigsäure-m-xylidid mit 27,2 Teilen 33 %iger Natronlauge in 500 Teilen Wasser und anschließendem Fällen mit 80 %iger Essigsäure, werden 0,7 Teile der Verbindung der Formel (1b) 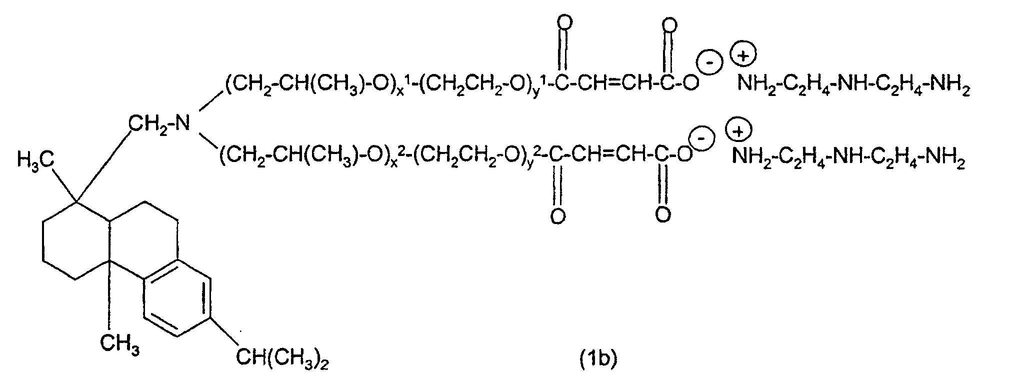 mit x¹ + x² = 4; y¹ + y² = 6
zugegeben. Anschließend kuppelt man die Suspension in einer Stunde bei einem pH-Bereich zwischen 5,7 und 5,3 und einer Temperatur von 20 bis 25°C mit einer ca. 10 %igen wässrigen 3,3'-Dichlorbenzidintetrazolösung (hergestellt durch Bisdiazotierung von 25,3 Teilen 3,3'-Dichlorbenzidin in verdünnter HCl und Natriumnitrit).
Mit Natronlauge stellt man den pH-Wert der Pigmentsuspension auf 7,5 ein und versetzt sie anschließend mit einer Harzlösung bestehend aus 87,5 Teilen Wasser, 19 Teilen disproportioniertem Kolophonium und 11,2 Teilen 33 %iger NaOH. Die Temperatur der Suspension wird auf 95°C erhöht und 3 Stunden gehalten. Bei 65°C (Abkühlung mit Eis) stumpft man durch Zugabe von 8 Teilen Al₂(SO₄)₃·18H₂O den pH-Wert auf ca. 8 ab. Nach 30 Minuten wird die Suspension mit Salzsäure auf pH 5 eingestellt, filtriert, salzfrei gewaschen, bei 63°C getrocknet und auf einer Stiftmühle gemahlen.
Man erhält 86,1 g einer Diarylgelbpigmentpräparation enthaltend P.Y. 174.

### Vergleichsbeispiel 1a (gegen EP-B-0 513 782):

Man verfährt wie in Beispiel 1, jedoch mit dem Unterschied, dass auf eine Zugabe von Al-Sulfat verzichtet wird.

### Vergleichsbeispiel 1b (gegen EP-A-0 671 443):

Man verfährt wie in Beispiel 1, jedoch mit dem Unterschied, dass auf eine Zugabe der Verbindung der Formel (1b) verzichtet wird.

### Vergleichsbeispiel 1c (gegen EP-A-0 313 360):

Man verfährt wie in Beispiel 1, jedoch mit dem Unterschied, dass auf eine Zugabe der Verbindung der Formel (1b) verzichtet wird und dass 97,2 Gew.-% disproportioniertes Kolophonium, bezogen auf Pigment, zugegeben werden.

### Beispiel 2:

Zu einer Kuppelkomponentensuspension mit einem pH-Wert von 5,6, hergestellt aus 3,9 Teilen Acetessigsäure-(2,5-dimethoxy-4-chlor-anilid) und 38,9 Teilen Acetessigsäure-m-xylidid mit 36 Teilen 33 %iger Natronlauge in 500 Teilen Wasser und anschließendem Fällen mit 9,6 Teilen 80 %iger Essigsäure und 22,3 Teilen 31%ige Salzsäure, werden 0,86 Teile der Verbindung der Formel (1b) zugegeben. Anschließend kuppelt man die Suspension in einer Stunde bei einem pH-Bereich zwischen 5,6 und 4,5 und einer Temperatur von 20 bis 25°C mit einer ca. 10 %igen wässrigen 3,3'-Dichlor-benzidintetrazolösung (hergestellt durch Bisdiazotierung von 25,3 Teilen DCB in verdünnter HCl und Natriumnitrit). Mit Natronlauge stellt man den pH-Wert der Pigmentsuspension auf 7,5 ein und versetzt sie anschließend mit einer Harzlösung bestehend aus 150 Teilen Wasser, 37,5 Teilen disproportioniertem Kolophonium und 22,4 Teilen 33 %iger NaOH. Die Temperatur der Suspension wird auf 95°C erhöht und 3 Stunden gehalten. Bei 65°C (Abkühlung mit Eis) stumpft man durch Zugabe von 15 Teilen Al₂(SO₄)₃·18H₂O den pH-Wert auf ca. 8 ab. Nach 30 Minuten wird die Suspension mit Salzsäure auf pH 5 eingestellt, filtriert, salzfrei gewaschen, bei 60°C getrocknet und auf einer Stiftmühle gemahlen.
Man erhält 107 g einer Diarylgelbpigmentpräparation enthaltend P.Y. 176.

### Vergleichsbeispiel 2a (gegen EP-B-0 513 782):

Man verfährt wie in Beispiel 2, jedoch mit dem Unterschied, dass auf eine Zugabe von Al-Sulfat verzichtet wird.

### Beispiel 3:

Zu einer Kuppelkomponentensuspension mit einem pH-Wert von 5,6, hergestellt aus 7,2 Teilen Acetessigsäureanilid und 33,1 Teilen Acetessigsäure-m-xylidid mit 27,2 Teilen 33 %iger Natronlauge in 500 Teilen Wasser und anschließendem Fällen mit 80 %iger Essigsäure, werden 0,7 Teile der Verbindung der Formel (1b) zugegeben. Anschließend kuppelt man die Suspension in einer Stunde bei einem pH von 5,5 (pH wird durch gleichzeitigen Zulauf von NaOH-Lösung konstant gehalten) bei einer Temperatur von 20 bis 25°C mit einer ca.
10 %igen wässrigen 3,3'-Dichlor-benzidintetrazolösung (hergestellt durch Bisdiazotierung von 25,3 Teilen DCB in verdünnter HCl und Natriumnitrit). Mit Natronlauge stellt man den pH-Wert der Pigmentsuspension auf 11 ein und versetzt sie anschließend mit einer Harzlösung bestehend aus 188 Teilen Wasser, 32,5 Teilen disproportioniertem Kolophonium und 20,0 Teilen 33 %iger NaOH. Die Temperatur der Suspension wird auf 95 °C erhöht und 0.5 h gehalten. Bei 65°C (Abkühlung mit Eis) stumpft man durch Zugabe von 13 Teilen Al₂(SO₄)₃·18H₂O den pH-Wert auf ca. 9 ab. Nach 30 Minuten wird die Suspension mit Salzsäure auf pH 5 eingestellt, filtriert, salzfrei gewaschen, bei 60°C getrocknet und auf einer Stiftmühle gemahlen.
Man erhält 99 g einer Diarylgelbpigmentpräparation enthaltend P.Y. 188.

### Vergleichsbeispiel 3a (gegen EP-B-0 513 782):

Man verfährt wie in Beispiel 3, jedoch mit dem Unterschied, dass auf eine Zugabe von Al-Sulfat verzichtet wird.

### Beispiel 4:

Zu einer Kuppelkomponentensuspension mit einem pH-Wert von 5,6, hergestellt aus 8,55 Teilen Acetessigsäure-o-anisidid und 32,8 Teilen Acetessigsäure-m-xylidid mit 40,8 Teilen 33 %iger Natronlauge in 292 Teilen Wasser und anschließendem Fällen mit 10,8 Teilen 80 %iger Essigsäure und ca. 25,5 Teilen 31%ige Salzsäure, werden 0,65 Teile der Verbindung der Formel (1b) zugegeben. Anschließend kuppelt man die Suspension in einer Stunde bei einem pH-Bereich zwischen 5,6 und 4,5 und einer Temperatur von 20 bis 25°C mit einer ca. 10 %igen wässrigen
3,3'-Dichlorbenzidintetrazolösung (hergestellt durch Bisdiazotierung von 25,3 Teilen DCB in verdünnter HCl und Natriumnitrit).
Mit Natronlauge stellt man den pH-Wert der Pigmentsuspension auf ca. 11 ein und versetzt sie anschließend mit einer Harzlösung bestehend aus 75 Teilen Wasser, 18,8 Teilen Kolophonium, 9,5 Teilen 33 %iger NaOH. Die Temperatur der Suspension wird auf 95°C erhöht und 2 Stunden gehalten. Bei 65 °C (Abkühlung mit Eis) und stumpft man durch Zugabe von 10 Teilen Al₂(SO₄)₃·18H₂O den pH-Wert auf ca. 8 ab. Nach 30 Minuten wird die Suspension mit Salzsäure auf pH 5 eingestellt, filtriert, salzfrei gewaschen, bei 63°C getrocknet und auf einer Stiftmühle gemahlen.
Man erhält 84,2 g einer Diarylgelbpigmentpräparation enthaltend P.Y. 127.

### Vergleichsbeispiel 4a (gegen EP-B-0 513 782)

Man verfährt wie in Beispiel 4, jedoch mit dem Unterschied, dass auf eine Zugabe von Al-Sulfat verzichtet wird.

### Beispiel 5:

Es wird wie in Beispiel 1 verfahren, jedoch mit der Änderung, dass nach Zugabe der Verbindung der Formel (1b) zusätzlich eine Emulsion von 2,75 Teilen Polyesteramid in Wasser zur Arylidlösung gegeben wird.
Anstelle der Harzlösung von Beispiel 1 wird eine Harzlösung bestehend aus 150 Teilen Wasser, 30 Teilen disproportioniertem Kolophonium und 19,0 Teilen 33%iger NaOH verwendet. Die Menge an Al₂(SO₄)₃·18H₂O beträgt 12 Teile.
Man erhält 101 g einer Diarylgelbpigmentpräparation enthaltend P.Y. 174.

### Vergleichsbeispiel 5a (gegen EP-B-0 513 782)

Man verfährt wie in Beispiel 5, jedoch mit dem Unterschied, dass auf eine Zugabe von Al-Sulfat verzichtet wird.

### Beispiel 6:

Es wird wie in Beispiel 2 verfahren, jedoch mit der Änderung, dass nach Zugabe der Verbindung der Formel (1b) zusätzlich eine Emulsion von 3 Teilen Polyesteramid in Wasser zur Arylidlösung gegeben wird. Die Menge an Al₂(SO₄)₃·18H₂O beträgt 16 Teile. Man erhält 110 g einer Diarylgelbpigmentpräparation enthaltend P.Y. 176.

### Vergleichsbeispiel 6a (gegen EP-B-0 513 782)

Man verfährt wie in Beispiel 6, jedoch mit dem Unterschied, dass auf eine Zugabe von Al-Sulfat verzichtet wird.

### Beispiel 7

Zu einer Kuppelkomponentensuspension mit einem pH-Wert von 5,6, hergestellt aus 11,6 Teilen (30 Mol-%) Acetessigsäure-o-toluidid und 28,8 Teilen (70 Mol-%) Acetessigsäure-m-xylidid mit 27,2 Teilen 33 %iger Natronlauge in 500 Teilen Wasser und anschließendem Fällen mit 80 %iger Essigsäure, werden 0,7 Teile der Verbindung der Formel (1b) zugegeben. Anschließend kuppelt man die Suspension in einer Stunde bei einem pH-Bereich zwischen 5,7 und 5,3 und einer Temperatur von 20 bis 25°C mit einer ca. 10 %igen wässrigen 3,3'-Dichlorbenzidintetrazolösung (hergestellt durch Bisdiazotierung von 25,3 Teilen 3,3'-Dichlorbenzidin in verdünnter HCl und Natriumnitrit).
Mit Natronlauge stellt man den pH-Wert der Pigmentsuspension auf ca. 7,5 ein und versetzt sie anschließend mit einer Harzlösung bestehend aus 150 Teilen Wasser, 30 Teilen disproportioniertem Kolophonium und 14 Teilen 33 %iger NaOH. Die Temperatur der Suspension wird auf 95°C erhöht und 3 Stunden gehalten. Bei 65°C (Abkühlung mit Eis) werden 20,8 Teile ZnCl₂ zugegeben. Man stellt mit HCl pH 9 ein. Nach 30 Minuten wird die Suspension mit Salzsäure auf pH 5 eingestellt, filtriert, salzfrei gewaschen, bei 63°C getrocknet und auf einer Stiftmühle gemahlen.
Man erhält 96,4 g einer Diarylgelbpigmentpräparation enthaltend P.Y. 174.

### Beispiel 8

Man verfährt wie in Beispiel 7, jedoch mit dem Unterschied, dass statt der Zugabe des Zn-Salzes 13 Teile FeCl₂ zugegeben werden.
Man erhält 102,7 g einer Diarylgelbpigmentpräparation enthaltend P.Y. 174.

### Beispiel 9

Man verfährt wie in Beispiel 7, jedoch mit dem Unterschied, dass statt der Zugabe des Zn-Salzes 20 Teile MnCl₂•4H₂O zugegeben werden.
Man erhält 98,7 g einer Diarylgelbpigmentpräparation enthaltend P.Y. 174.

### Anwendungsbeispiele:

Aus den Pigmentpräparationen der vorstehenden Beispiele werden Offsetfarben hergestellt, indem die gemahlene Pigmentpräparation in nachstehenden Offsetfimis eingerührt und auf einer Dreiwalze dispergiert wird. Die Prüfung der so hergestellten Druckfarben erfolgt nach einer Lagerung von 24 Stunden.
Die entsprechenden Druckfarben sind wie folgt aufgebaut:
12,0 Teile Pigmentpräparation
38,0 Teile ®Albertol VKP 1385 (Fa. Solutia, D)
4,5 Teile ®Vialkyd AL 766 (Fa. Solutia, D)
42,5 Teile Druckfarbenöl PKW F 6/9 (Fa. Haltermann, Hamburg)
2,8 Teile ®Printagel (SUN Chemical-Hartmann, Frankfurt)
0,2 Teile Sikkativ
100,0 Teile.

Die Ergebnisse sind in nachstehender Tabelle wiedergegeben.

**Tabelle:**

| Pigmentpräparation nach Beispiel | Fließfähigkeit in mm | Laray-Viskosität in Pa·s | Farbstärke * in % |
|---|---|---|---|
| 1 | 50 | 29 | 105 |
| Vergleichsbeispiel 1a | 17 | 19 | 109 |
| Vergleichsbeispiel 1b | 12 | 26 | 84 |
| Vergleichsbeispiel 1c | 0 | 31 | 55 |
| 2 | 25 | 30 | 104 |
| Vergleichsbeispiel 2a | 13 | 13 | 108 |
| 3 | 87 | 18 | 88 |
| Vergleichsbeispiel 3a | 60 | 12 | 88 |
| 4 | 54 | 28 | 102 |
| Vergleichsbeispiel 4a | 27 | 16 | 104 |
| 5 | 83 | 24 | 100 |
| Vergleichsbeispiel 5a | 43 | 12 | 105 |
| 6 | 86 | 24 | 99 |
| Vergleichsbeispiel 6a | 56 | 12 | 104 |
| 7 | 40 | 20 | 104 |
| 8 | 58 | 23 | 109 |
| 9 | 114 | 36 | 111 |

| | | | |
|---|---|---|---|
| * Farbstärke bezogen auf Permanent Gelb GRX 86 (100 %), ein kommerziell erhältliches Standardprodukt für Offsetanwendungen nicht normiert. Daher sind die Farbstärken der Vergleichsbeispiele, die kein Al-Salz enthalten, teilweise höher. | | | |

Es zeigt sich, dass nur die erfindungsgemäßen Beispiele sowohl eine hohe Fließfähigkeit als auch eine hohe Laray-Viskosität besitzen. Die Pigmentpräparationen nach Vergleichsbeispiel 1b und 1c haben Defizite in der Farbstärke.

## Patentansprüche

1. Diarylgelbpigmentpräparation, enthaltend
a) mindestens ein Diarylgelbpigment,
b) mindestens ein Naturharz auf Basis von Kolophonium oder modifiziertem
Kolophonium,
c) mindestens eine Verbindung der Formel (1) 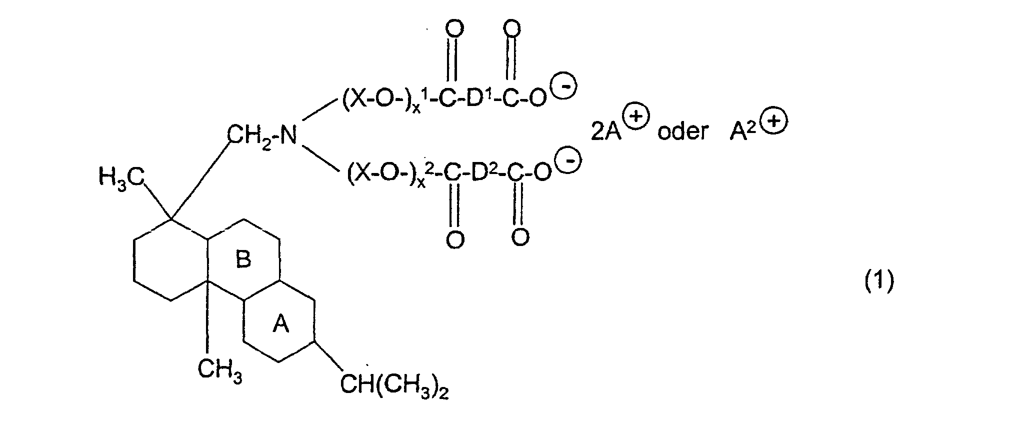 worin der Ring A gesättigt, ungesättigt oder aromatisch und der Ring B gesättigt oder ungesättigt ist;
X für eine Gruppe der Formeln -CH₂-CH₂-, -CH₂CH(CH₃)- oder -CH(CH₃)CH₂-, oder eine Kombination daraus, wenn x > 1 ist;
x¹ und x² eine Zahl von 0 bis 16 bedeutet, wobei die Summe x¹ und x² eine Zahl von 2 bis 20 ist;
D¹ und D² gleich oder verschieden sind und einen gesättigten oder olefinischen
C₁-C₄-Kohlenwasserstoffrest bedeuten;
A^{⊕} und A^{2⊕} ein Ammoniumion eines Amins der Formel
H₂N-(CR¹R²)_{y}¹-(NR³-(CR¹R²)_{y}²-)_{z}-NR⁴R⁵
bedeuten, worin R¹ bis R⁵ gleich oder verschieden sind und Wasserstoff, Methyl oder Ethyl bedeuten, y¹ und y² jeweils eine Zahl von 1 bis 4 und z eine Zahl von Null bis 10 bedeutet; und
d) eine Aluminium-, Zink-, Mangan- oder Eisen-Verbindung in einer Menge von 0,1 bis 8 Gew.-% (berechnet als Metallkation), bezogen auf Komponente b); und gegebenenfalls
e) ein Polyesteramid und/oder übliche Hilfsmittel.

2. Diarylgelbpigmentpräparation nach Anspruch 1, **dadurch gekennzeichnet, dass** das Diarylgelbpigment a) eine Verbindung der Formel (2) ist, 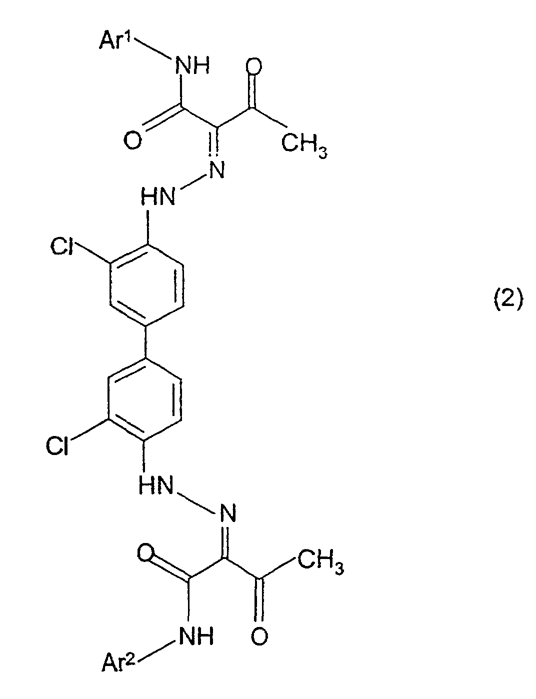 worin Ar¹ und Ar² gleich oder verschieden sind und eine unsubstituierte oder mit ein bis drei Substituenten aus der Gruppe Halogen, Methyl und Methoxy substituierte Phenylgruppe bedeuten.

3. Diarylgelbpigmentpräparation nach Anspruch 1 oder 2, **dadurch gekennzeichnet, dass** das Diarylgelbpigment C.I. Pigment Yellow 12, 13, 14, 17, 126, 127, 174, 176, 188 oder eine Mischung davon ist.

4. Diarylgelbpigmentpräparation nach mindestens einem der Ansprüche 1 bis 3, **dadurch gekennzeichnet, dass** das Naturharz b) Abietinsäure, Dehydroabietinsäure, Dihydroabietinsäure, Tetrahydroabietinsäure, Laevopimarsäure, Dextropimarsäure, Isodextropimarsäure, oder eine Mischung davon ist.

5. Diarylgelbpigmentpräparation nach mindestens einem der Ansprüche 1 bis 4, **dadurch gekennzeichnet, dass** in der Verbindung der Formel (1)
x¹ und x² eine Zahl von 1 bis 10, wobei die Summe x¹ und x² 4 bis 16 beträgt;
D¹ und D² -CH₂-, CH₂CH₂-, -(CH₂)₄- oder -CH=CH-;
y¹ und y² jeweils die Zahl 2 oder 3; und
z eine Zahl von 1 bis 4 bedeuten.

6. Diarylgelbpigmentpräparation nach mindestens einem der Ansprüche 1 bis 5, dadurch gekennzeichhet, dass c) eine Verbindung der Formel (1a) 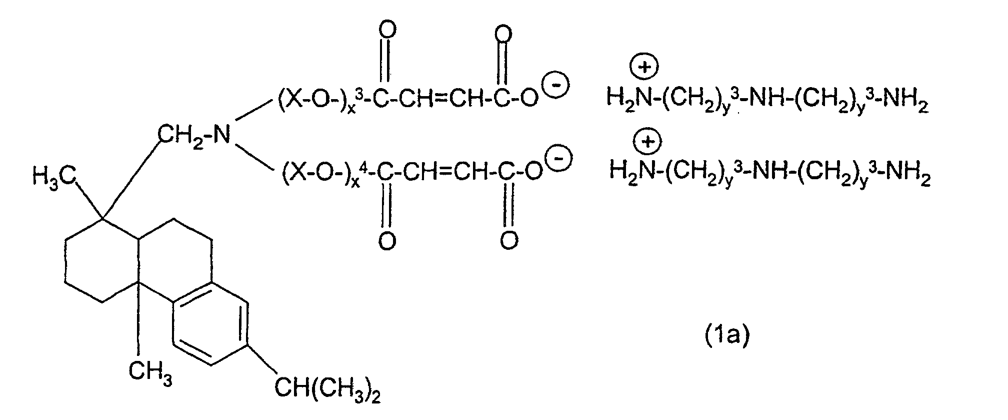 worin X wie in Anspruch 1 definiert ist;
x³ und x⁴ jeweils eine Zahl von 2 bis 8 und die Summe x³ und x⁴ eine Zahl von 6 bis 12 ist, und
y³ die Zahl 2 oder 3 bedeutet.

7. Diarylgelbpigmentpräparation nach mindestens einem der Ansprüche 1 bis 6, **dadurch gekennzeichnet, dass** die Komponente d) ein Sulfat, Carbonat, Chlorid, Nitrat, Alkoholat, Carboxylat, Acetat, Citrat oder Hydroxid der Metalle Al, Zn, Mn oder Fe ist.

8. Diarylgelbpigmentpräparation nach mindestens einem der Ansprüche 1 bis 7, bestehend im wesentlichen aus
50 bis 90 Gew.-% an Komponente a),
5 bis 45 Gew.-% an Komponente b),
0,2 bis 5 Gew.-% an Komponente c),
0,05 bis 2 Gew.-% an Komponente d), berechnet als Metallkation, und
0 bis 5 Gew.-% an Komponente e),
jeweils bezogen auf das Gesamtgewicht (100 Gew.-%) der Pigmentpräparation.

9. Verfahren zur Herstellung einer Diarylgelbpigmentpräparation nach mindestens einem der Ansprüche 1 bis 8, **dadurch gekennzeichnet, dass** man ein Acetoacetylanilid mit einem Tetrazoniumsalz des 3,3'-Dichlorbenzidins in Gegenwart der Komponente c) kuppelt; die entstandene Pigmentsuspension mit einer wässrig-alkalischen Lösung der Komponente b) kombiniert und auf eine Temperatur zwischen 65 und 150°C erhitzt; die Komponente d) in einer Menge von 0,1 bis
8 Gew.-%, bezogen auf Komponente b), zugibt und anschließend durch Ansäuern die Diarylgelbpigmentpräparation ausfällt und isoliert.

10. Verwendung einer Diarylgelbpigmentpräparation nach einem oder mehreren der Ansprüche 1 bis 8 zur Herstellung von Druckfarben, insbesondere Offsetdruckfarben.

## Claims

1. A diaryl yellow pigment preparation comprising
a) at least one diaryl yellow pigment,
b) at least one natural resin based on rosin or modified rosin,
c) at least one compound of the formula (1) 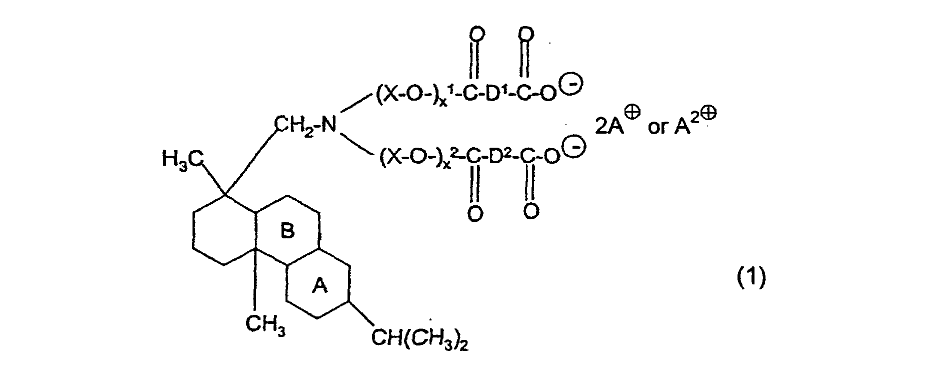 in which the ring A is saturated, unsaturated or aromatic and the ring B is saturated or unsaturated;
X is a group of the formulae -CH₂-CH₂-, -CH₂CH(CH₃)- or -CH(CH₃)CH₂-, or a combination thereof, when x > 1;
x¹ and x² are a number from 0 to 16, the sum of x¹ and x² being a number from 2 to 20;
D¹ and D² are identical or different and are a saturated or olefinic C₁-C₄-hydrocarbon radical;
A^{⊕} and A^{2⊕} are an ammonium ion of an amine of the formula
H₂N-(CR¹R²)_{y}¹-(NR³-(CR¹R²)_{y}²-)_{z}-NR⁴R⁵
in which R¹ to R⁵ are identical or different and are hydrogen, methyl or ethyl, y¹ and y² are each a number from 1 to 4, and z is a number from zero to 10; and
d) an aluminum, zinc, manganese or iron compound in an amount of from 0.1 to 8% by weight (calculated as metal cation), based on component b), and if desired
e) a polyesteramide and/or customary auxiliaries.

2. A diaryl yellow pigment preparation as claimed in claim 1, wherein the diaryl yellow pigment a) is a compound of the formula (2) 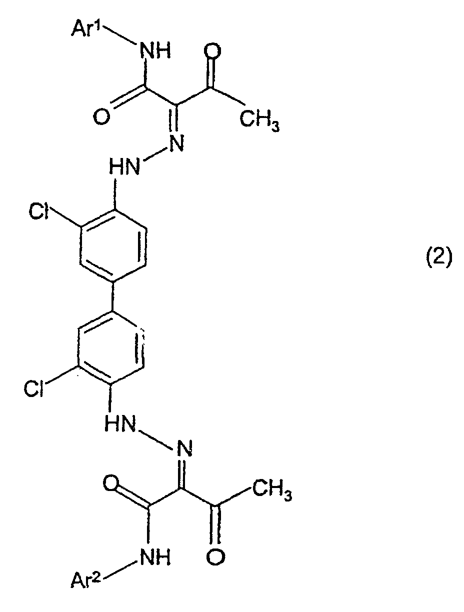 in which Ar¹ and Ar² are identical or different and are an unsubstituted phenyl group or a phenyl group substituted by from one to three substituents from the group consisting of halogen, methyl, and methoxy.

3. A diaryl yellow pigment preparation as claimed in claim 1 or 2, wherein the diaryl yellow pigment is C.I. Pigment Yellow 12, 13, 14, 17, 126, 127, 174, 176, 188 or a mixture thereof.

4. A diaryl yellow pigment preparation as claimed in at least one of claims 1 to 3, wherein the natural resin b) is abietic acid, dehydroabietic acid, dihydroabietic acid, tetrahydroabietic acid, levopimaric acid, dextropimaric acid, isodextropimaric acid, or a mixture thereof.

5. A diaryl yellow pigment preparation as claimed in at least one of claims 1 to 4, wherein in the compound of the formula (1)
x¹ and x² are a number from 1 to 10, the sum of x¹ and x² being from 4 to 16;
D¹ and D² are -CH₂-, -CH₂CH₂-, -(CH₂)₄- or -CH=CH-;
y¹ and y² are each the number 2 or 3; and
z is a number from 1 to 4.

6. A diaryl yellow pigment preparation as claimed in at least one of claims 1 to 5, wherein c) is a compound of the formula (1a) 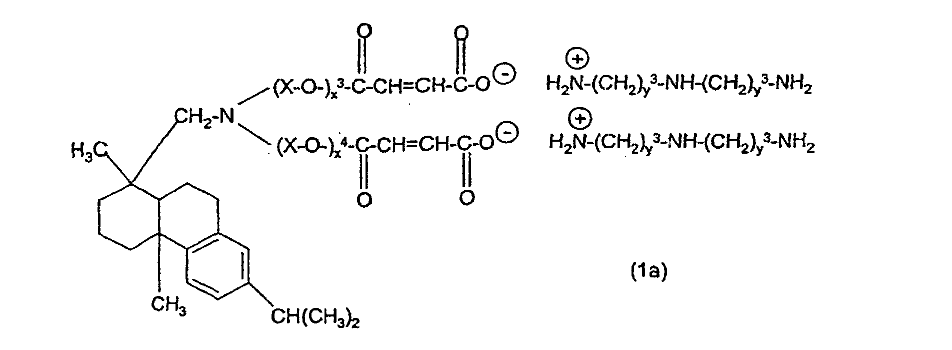 in which X is as defined in claim 1;
x³ and x⁴ are each a number from 2 to 8 and the sum of x³ and x⁴ is a number from 6 to 12, and
y³ is the number 2 or 3.

7. A diaryl yellow pigment preparation as claimed in at least one of claims 1 to 6, wherein component d) is a sulfate, carbonate, chloride, nitrate, alkoxide, carboxylate, acetate, citrate or hydroxide of metals Al, Zn, Mn or Fe.

8. A diaryl yellow pigment preparation as claimed in at least one of claims 1 to 7, composed essentially of
50 to 90% by weight of component a),
5 to 45% by weight of component b),
0.2 to 5% by weight of component c),
0.05 to 2% by weight of component d), calculated as metal cation, and
0 to 5% by weight of component e),
based in each case on the total weight (100% by weight) of the pigment preparation.

9. A process for preparing a diaryl yellow pigment preparation as claimed in at least one of claims 1 to 8, which comprises coupling an acetoacetylanilide with a tetrazonium salt of 3,3'-dichlorobenzidine in the presence of component c); combining the resulting pigment suspension with an aqueous-alkaline solution of component b) and heating it to a temperature between 65 and 150°C; adding component d) in an amount of from 0.1 to 8% by weight, based on component b), and subsequently precipitating the diaryl yellow pigment preparation by acidification and isolating it.

10. The use of a diaryl yellow pigment preparation as claimed in one or more of claims 1 to 8 for producing printing inks, especially offset printing inks.

## Revendications

1. Préparation de pigments de jaune de diaryle, contenant
a) au moins un pigment de jaune de diaryle,
b) au moins une résine naturelle à base de colophane ou de colophane modifiée,
c) au moins un composé de formule (1) 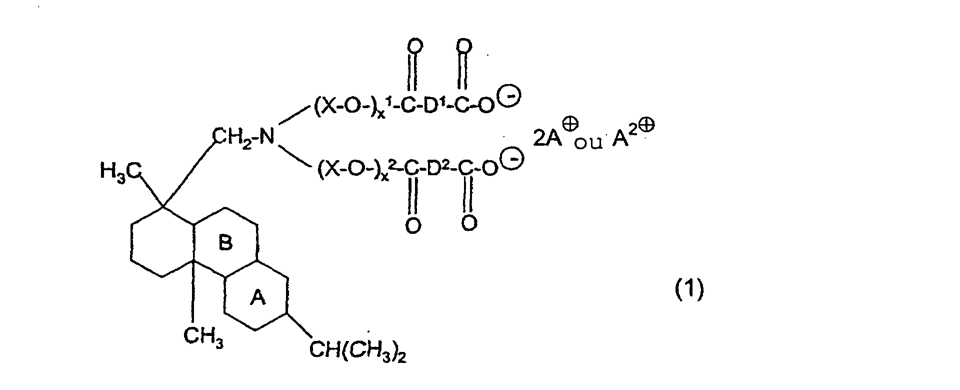 dans laquelle le cycle A est saturé, insaturé ou aromatique et le cycle B est saturé ou insaturé,
X représente un groupe des formules -CH₂-CH₂-, -CH₂CH(CH₃)- ou -CH(CH₃)CH₂- ou une combinaison de ceux-ci, lorsque x est supérieur à 1 ;
x¹ et x² représentent un nombre de 0 à 16, la somme de x¹ et x² étant un nombre de 2 à 20 ;
D¹ et D² sont identiques ou différents et représentent un résidu hydrocarboné en C₁ à C₄ saturé ou oléfinique ;
A^{⊕} et A^{2⊕} représentent un ion ammonium d'une amine de formule
H₂N-(CR¹R²)_{y}¹-(NR³-(CR¹R²)_{y}²-)_{z}-NR⁴R⁵,
dans laquelle R¹ à R⁵ sont identiques ou différents et représentent un hydrogène, méthyle ou éthyle, y¹ et y² représentent respectivement un nombre de 1 à 4 et z est un nombre de zéro à 10 ; et
d) un composé d'aluminium, de zinc, de manganèse ou de fer en une quantité de 0,1 à 8 % en poids (calculé comme cation métallique), par rapport au composant b) ; et éventuellement
e) un polyesteramide et/ou des adjuvants usuels.

2. Préparation de pigments de jaune de diaryle selon la revendication 1, **caractérisée en ce que** le pigment de jaune de diaryle a) est un composé de formule (2) 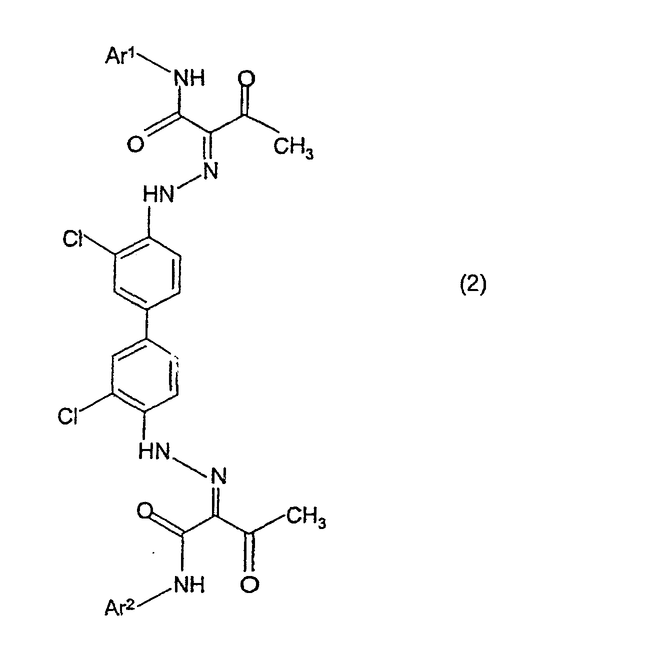 dans laquelle Ar¹ et Ar² sont identiques ou différents et représentent un groupe phényle non substitué ou substitué avec un à trois substituants du groupe halogène, méthyle et méthoxy.

3. Préparation de pigments de jaune de diaryle selon la revendication 1 ou 2, **caractérisée en ce que** le pigment de jaune de diaryle est C.I. Pigment Yellow 12, 13, 14, 17, 126, 127, 174, 176, 188 ou un mélange de ceux-ci.

4. Préparation de pigments de jaune de diaryle selon au moins l'une des revendications 1 à 3, **caractérisée en ce que** la résine naturelle b) est l'acide abiétique, l'acide déshydroabiétique, l'acide dihydroabiétique, l'acide tétrahydroabiétique, l'acide lévopimarique, l'acide dextropimarique, l'acide isodextropimarique, ou un mélange de ceux-ci.

5. Préparation de pigments de jaune de diaryle selon au moins l'une des revendications 1 à 4, **caractérisée en ce que**, dans le composé de formule (1)
x¹ et x² représentent un nombre de 1 à 10, dans lequel la somme de x¹ et x² est de 4 à 16 ;
D¹ et D² représentent -CH₂-, -CH₂CH₂-, -(CH₂)₄- ou -CH=CH- ;
y¹ et y² représentent respectivement le nombre 2 ou 3 ; et
z représente ùn nombre de 1 à 4.

6. Préparation de pigments de jaune de diaryle selon au moins l'une des revendications 1 à 5, **caractérisée en ce que** c) est un composé de formule (la) 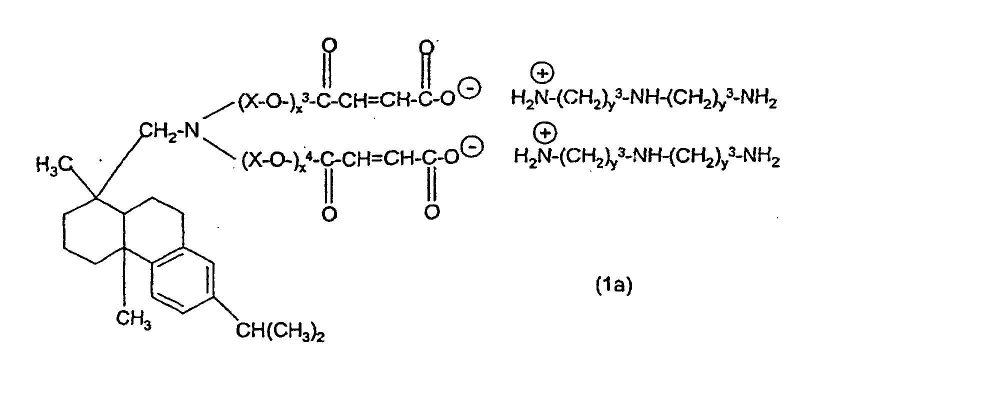 dans laquelle X est défini comme à la revendication 1 ;
x³ et x⁴ sont respectivement un nombre de 2 à 8 et la somme de x³ et x⁴ un nombre de 6 à 12, et
y³ représente le nombre 2 ou 3.

7. Préparation de pigments de jaune de diaryle selon au moins l'une des revendications 1 à 6, **caractérisée en ce que** le composant d) est un sulfate, carbonate, chlorure, nitrate, alcoolate, carboxylate, acétate, citrate ou hydroxyde des métaux Al, Zn, Mn ou Fe.

8. Préparation de pigments de jaune de diaryle selon au moins l'une des revendications 1 à 7, constituée essentiellement de
50 à 90 % en poids de composant a),
5 à 45 % en poids de composant b),
0,2 à 5 % en poids de composant c),
0,05 à 2 % en poids de composant d), calculé comme cation métallique, et
0 à 5 % en poids de composant e), respectivement par rapport au poids total (100 % en poids) de la préparation de pigments.

9. Procédé pour la fabrication d'un préparation de pigments de jaune de diaryle selon au moins l'une des revendications 1 à 8, **caractérisé en ce qu'**on couple un acétoacétylanilide avec un sel de tétrazonium de la 3,3'-dichlorobenzidine en présence du composant c); on combine la suspension de pigments obtenue avec une solution aqueuse-alcaline du composant b) et on chauffe à une température comprise entre 65 et 150 °C ; on ajoute le composant d) en une quantité de 0,1 à 8 % en poids, par rapport au composant b) et on fait ensuite précipiter par acidification la préparation de pigments de jaune de diaryle et on l'isole.

10. Utilisation d'une préparation de pigments de jaune de diaryle selon l'une ou plusieurs des revendications 1 à 8 pour la préparation d'encres d'imprimerie, en particulier d'encres d'imprimerie offset.
